# EUROPEAN PATENT APPLICATION

(11) **EP 4 451 656 A1**
(43) Date of publication of application: **23.10.2024**
(21) Application number: 24163639.8
(22) Date of filing: 14.03.2024
(51) Int. Cl.: H04M 1/02, G07C 9/00, H04M 11/02, H04N 7/18

(54) **FIXTURE WITH INTEGRATED CONTROL SYSTEM**

(30) Priority: 19.04.2023 IT 202300007665
(71) Applicant: Olivieri, Paola, 16154 Genova (GE) (IT); Palombo, Alessandro, 16154 Genova (GE) (IT)
(72) Inventor: Olivieri, Paola, 16154 Genova (GE) (IT); Palombo, Alessandro, 16154 Genova (GE) (IT)
(74) Representative: Ottazzo, Marco Francesco Agostino

(57) **Abstract**

Herein described is a fixture (10) for buildings comprising at least one door leaf (12, 14) provided with a support framework (16, 18) and at least one wall (20, 22). The wall is a stratified wall comprising a plurality of at least partially transparent panels (24A; 24B; 26), having interposed therebetween films (28A; 28B) made of plastic material, that is also at least partially transparent. The fixture further comprises an electronic control unit (30), at least one user interface device (34), which comprises at least one touch screen positioned in an intermediate panel, at least one capacitive touch foil (46), which is positioned in a front panel, an electronic audio communication system (36), which comprises at least one audio input device and at least one audio output device, an electronic video acquisition system (38), which comprises at least one video camera, at least one network interface device (40), which is designed to place in communication the user interface device with at least one remote communication device (S), at least one electric lock (50), which is designed to lock the door leaf in a closed configuration thereof, and electrical power supply means (42), which are designed to electrically power the electronic control unit, the user interface device, the electronic audio communication system, the electronic video acquisition system, the network interface device and the electric lock.

## Description

The present invention relates to the technical field of managing condominium accesses and it generally relates to a fixture for buildings. More particularly, the present invention relates to an external fixture which integrates a system for video intercom devices and for controlling accesses in a residential building such as for example a condominium.

As known, a fixture is a movable structure which is used to close the openings left in the buildings for use as entrance or for allowing air and light to pass through. Depending on the compartments for which they are designed there are distinguished in external and internal fixtures. Particularly, the external fixtures protect the internal of a building from harsh weather, from atmospheric agents and from potential tampering and/or unwanted break in. The external fixtures must therefore have greater resistance than the internal fixtures. The external fixtures for example comprise entry main doors, gates, and window frames.

When an external fixture consists of the entry main door of a condominium, such entry main door is usually combined with a conventional intercom. The intercom allows to place in communication each resident with the external visitors and/or service providers. To date the communication system through a conventional intercom occurs through a wired push-button panel, usually arranged in proximity of the entry main door, and an audio system which communicates with an audio terminal installed in the home of each resident. At times, the conventional intercom may be integrated by a video camera and by an audio/video terminal, being a video intercom in this case.

Currently, neither the intercoms, nor the video intercoms allow a management of condominium accesses that is integrated in a specific fixture, such as for example an entry main door, and which also has programmable and interactive functions. There is the possibility of installing conventional intercoms, same case applying to video intercoms as well as video surveillance equipment. However, all these equipment consist of components separated from each other and they are difficult if not impossible to update and programme.

In addition, all these equipment need to be installed in special housings obtained on walls arranged in proximity of openings for access to a condominium. This entails wiring to connect each equipment to each individual apartment, as well as external masonry works for housing the push-button panel and/or one or more video cameras, when provided for.

Document US 2021/355747 A1 discloses a system for controlling accesses integrated in a single door of an individual private apartment. The door has metal frame on which there are applied covering panels made of acrylic material. The door does not provide for any interactive display positioned on the exterior panel thereof. In addition, the system for controlling accesses regards only the owner or user of the private apartment. The system for controlling accesses therefore is not provided with functions for controlling accesses of a plurality of different users, such as for example the residents of a condominium. The system for controlling accesses is not even provided with remote communication functionalities with the different users.

Therefore, an object of the present invention is to provide a fixture with an integrated control system which is capable of overcoming the aforementioned drawbacks of the prior art in an extremely simple, cost-effective and particularly functional manner.

In detail, an object of the present invention is to provide a fixture with an integrated control system which allows to optimise the information relating to accesses of a plurality of people in a specific condominium, with the precise purpose of increasing the method for controlling the accesses and safety for the residents.

Another object of the present invention is to provide a fixture with an integrated control system which allows to combine and install on a single fixture all the equipment that can be usually installed in proximity of the openings for access to a condominium, limiting the need to carry out external masonry works to house such equipment and the respective connection systems as much as possible.

A further object of the present invention is to provide a fixture with integrated control system wherein this control system can also operate even in case of failure of all of its equipment and/or of data network and/or power supply.

These and other objects according to the present invention are achieved by providing a fixture with integrated control system as described in claim 1.

Further features of the invention are outlined by the dependent claims, which are an integral part of the present description.

The features and advantages of a fixture with integrated control system according to the present invention will be more apparent from following exemplifying and non-limiting description with reference to the attached schematic drawings wherein:
figure 1 is a schematic view of a preferred embodiment of a fixture with integrated control system according to the present invention;
figure 2 is a schematic view of some components of the fixture with integrated control system according to the present invention;

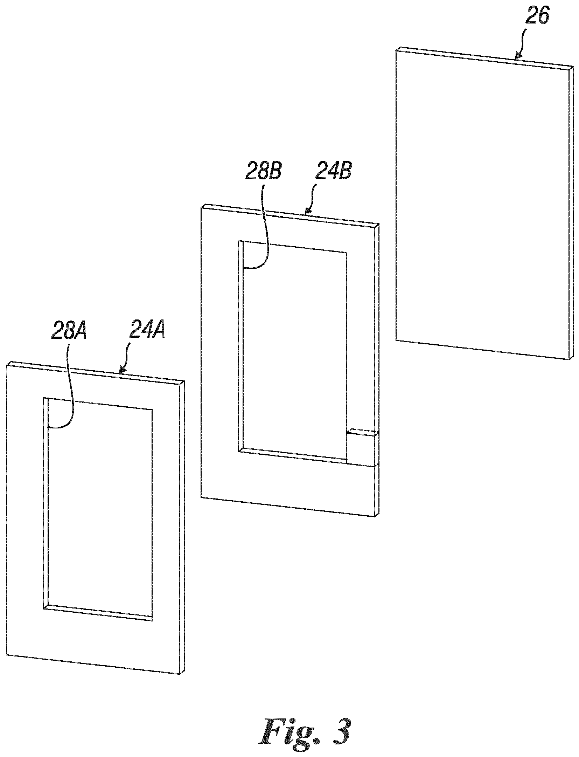

figure 3 is an exploded view which shows the layers of a stratified wall of the fixture with integrated control system according to the present invention;

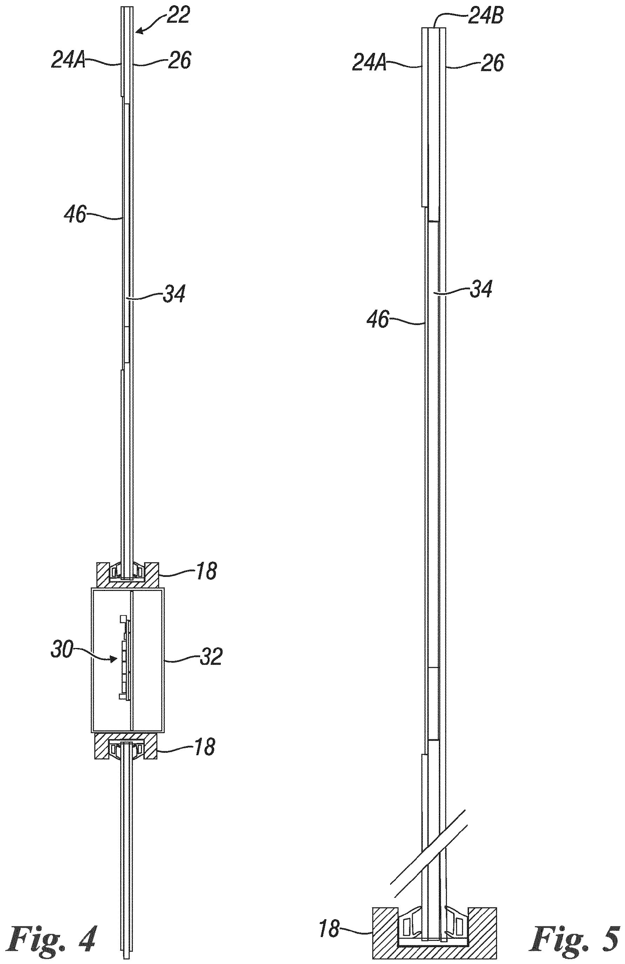

figure 4 is a cross-sectional view of a portion of the fixture with integrated control system according to the present invention;
figure 5 is a partial view of the portion of fixture shown in figure 4;

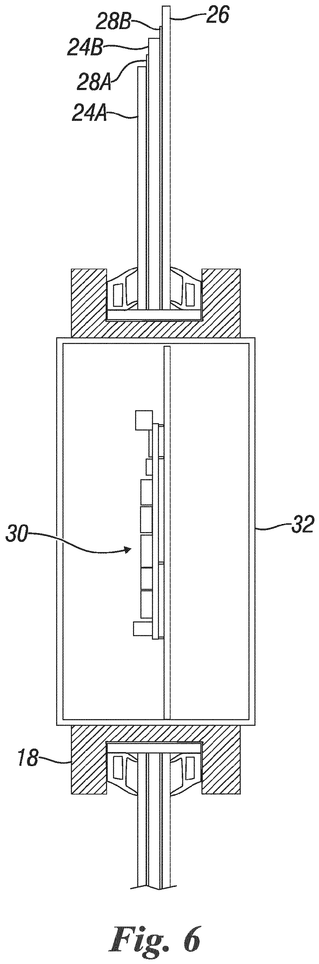

figure 6 is another partial view of the portion of fixture shown in figure 4;

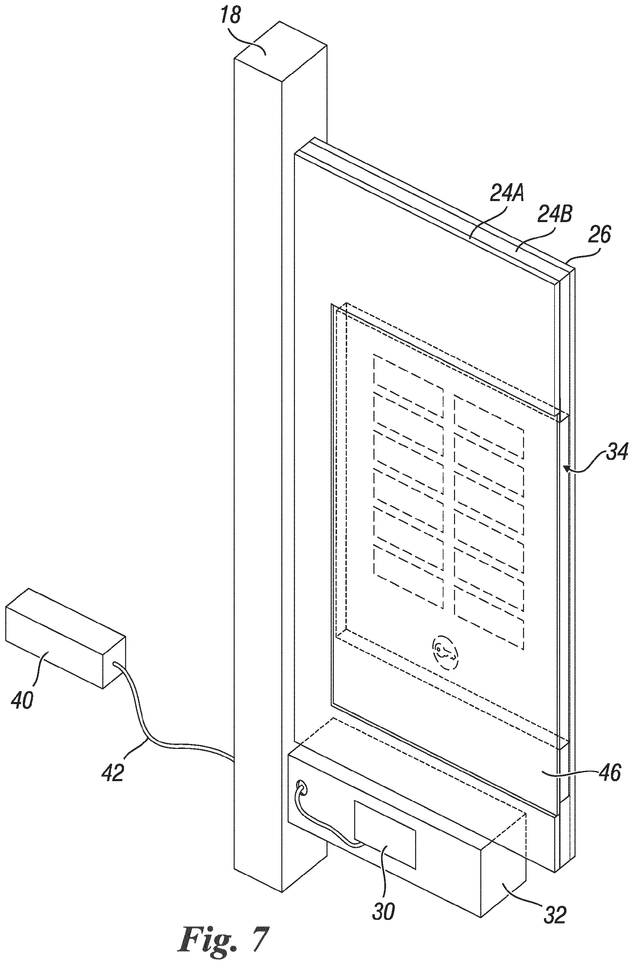

figure 7 is another schematic view of some components of the fixture with integrated control system according to the present invention;
figure 8 is a further schematic view of some components of the fixture with integrated control system according to the present invention; and
figure 9 shows the remote connection functionalities of the fixture with integrated control system according to the present invention.

With reference to the figures, there is shown a preferred embodiment of a fixture with integrated control system according to the present invention. The fixture is indicated in its entirety with reference numeral 10 and it is designed to be installed in a generic building, preferably a residential building such as for example a condominium.

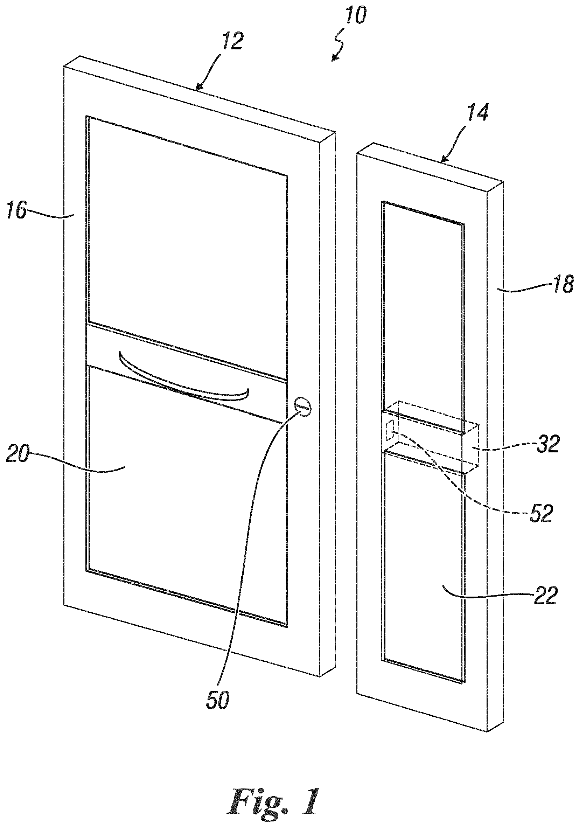

The fixture 10 comprises at least one door leaf 12, 14. Particularly, the fixture 10 may comprise both at least one door leaf 12, which forms one or more of the building access doors, and an assembly formed by at least one movable door leaf 12 and at least one fixed door leaf 14, for example as shown in figure 1. Irrespective of the type, each door 12, 14 comprises a support framework 16, 18, which forms the structural part of the fixture 10 and which is designed for the coupling with a frame installed in a corresponding opening of the building. For example, the support framework 16, 18 may be made starting from commercial profiles preferably made of aluminium, or possibly made of plastic material such as PVC. These profiles are suitably modified in the workshop so as to allow the housing and assembly both of the mechanical and/or electrical accessories normally envisaged in an access main door of a building, and of the various specific electrical components of the system according to the present invention, which will be described hereinafter.

Each door leaf 12, 14 further comprises at least one wall 20, 22 mounted on a support framework 16, 18. In detail, each wall 20, 22 is a stratified wall consisting of a first at least partially transparent front panel 24A, a second at least partially transparent rear panel 26 and at least one at least partially transparent intermediate panel 24B. The intermediate panel 24B is interposed between the first front panel 24A and the second rear panel 26. Between the first front panel 24A and the intermediate panel 24B there is interposed at least one first film 28A made of at least partially transparent plastic material, while between the intermediate panel 24B and the second rear panel 26 there is interposed at least one second film 28B made of at least partially transparent plastic material. Preferably, both the first front panel 24A, and the intermediate panel 24B, and the second front panel 26 are fully transparent and they are for example made of glass, so that each wall 20, 22 if formed by a stratified wall of the type used normally, in the full door leaf or half door leaf version, in the most common access main doors for residential buildings, such as for example condominiums.

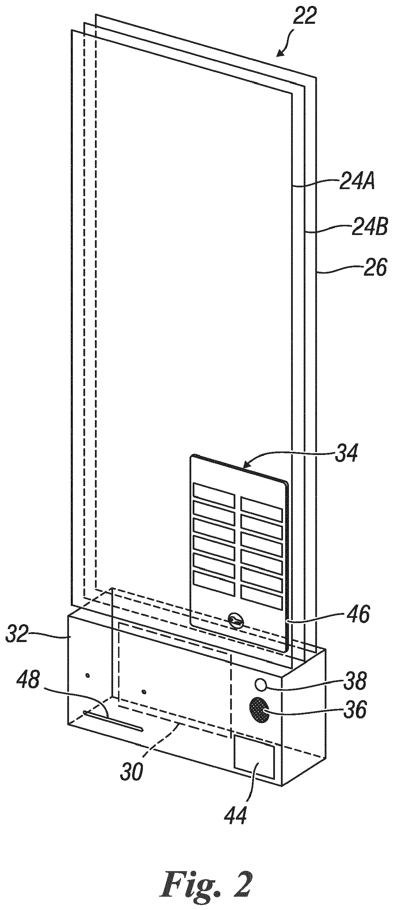

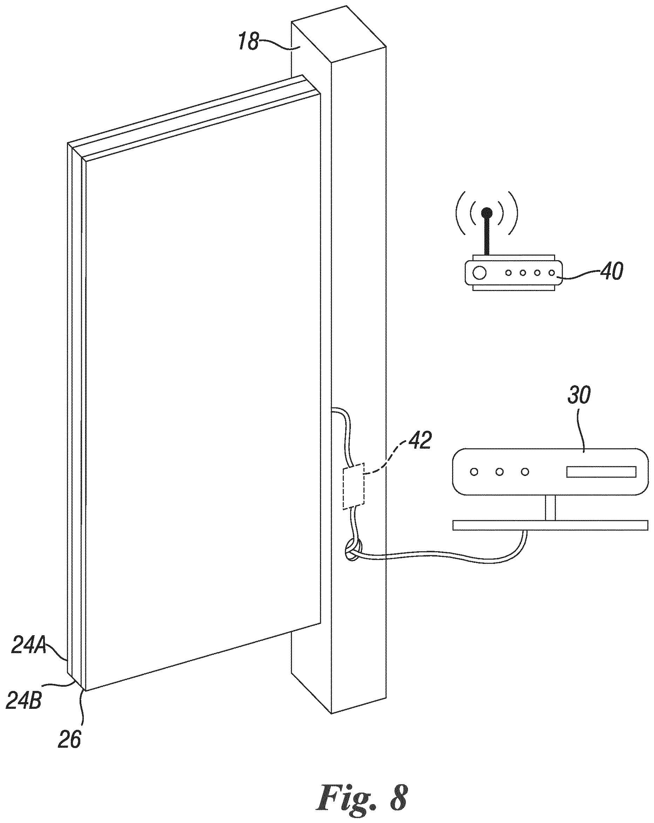

In the fixture 10 there is integrated at least one electronic control unit 30, which is at least partially contained in a respective container 32 obtained in the support framework 18, for example shown in figure 2. Alternatively, or additionally, the electronic control unit 30 may comprise one or more components which are arranged externally to the fixture 10 but which are however suitably connected with the fixture 10, for example shown in figure 8. The electronic control unit 30 may for example consist of a motherboard which is provided with one or more central processing units (CPU) and which is designed for operation with an appropriate operating system of the known type (Android, Linux, etc.).

The fixture 10 comprises at least one user interface device 34, which consists of at least one touch screen operatively connected to the electronic control unit 30. This touch screen is positioned within an intermediate through housing 28B obtained on the intermediate panel 24B. The user interface device 34 has a thickness substantially equal to the thickness of the intermediate panel 24B and it occupies a surface substantially equal to the overall thickness of the intermediate through housing 28B. The user interface device 34 may therefore for example consist of an ultra-thin screen based on the OLED or AMOLED technology and with ultra-low energy consumption, with dimensions which preferably vary between 10" and 17".

The fixture 10 further comprises at least one capacitive touch foil 46, which is positioned inside a front through housing 28A obtained on the first front panel 24A, at the intermediate through housing 28B of the intermediate panel 24B and therefore of the user interface device 34. The capacitive touch foil 46 has a thickness substantially equal to the thickness of the first front panel 24A and it occupies a surface substantially equal to the overall thickness of the front through housing 28A. The capacitive touch foil 46 has dimensions compatible with the dimensions of the touch screen of the user interface device 34, so as to cover such user interface device 34.

Preferably, the touch screen of the user interface device 34 is coplanar with respect to the front surface of the first front panel 24A of the wall 20 of the door leaf 12. Therefore, people may impart touch commands to the user interface device 34, through the capacitive touch foil 46, remaining outside the fixture 10 and therefore outside the building.

The fixture 10 further comprises an electronic audio communication system 36, consisting of at least one audio input device, such as for example a microphone, and at least one audio output device, such as for example a speaker. Also the electronic audio communication system 36 is operatively connected to the electronic control unit 30 and it is integrated in the support framework 18. The fixture 10 further comprises an electronic video acquisition system 38, consisting of at least one video camera with night vision functionality, which is also operatively connected to the electronic control unit 30 and it is integrated in the support framework 18.

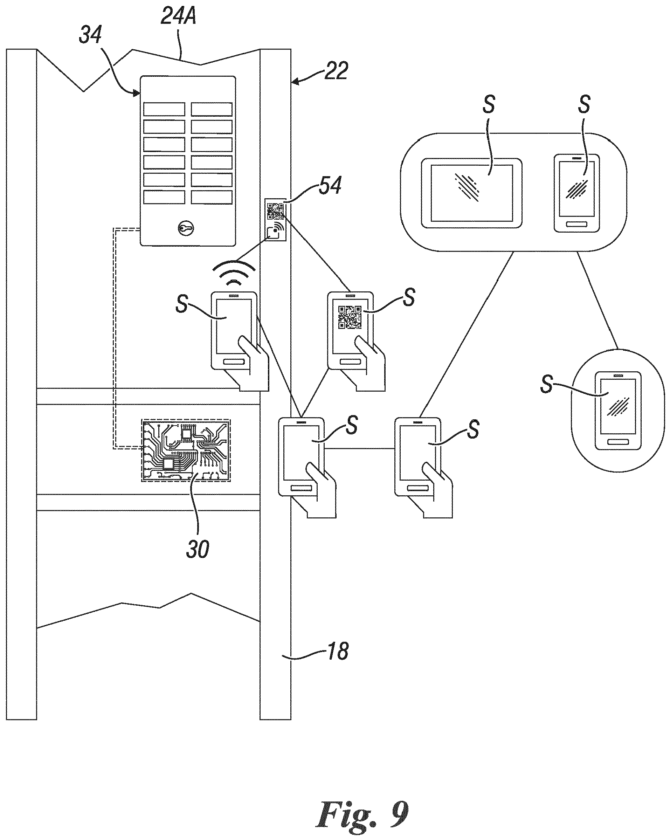

In the fixture 10 there is integrated at least one network interface device 40, such as for example a modem or a router designed for internet connection, or a simple wiring to the network. The network interface device 40 is operatively connected to the electronic control unit 30 and it is designed to place in communication the user interface device 34 with at least one remote communication device. This remote communication device may for example consist both of a conventional audio or audio/video terminal, therefore an intercom or a video intercom which is connected to the user interface device 34 through special wiring and which is installed in the individual homes of the building in which the fixture 10 is installed, and also the smartphone or tablet S (see figure 9) of a person who lives in the building (in this case, the connection can be carried out through a modem or router). The user interface device 34 is therefore designed to activate an audio/video communication with each remote communication device, as will be better specified below.

The fixture 10 is then provided, in a per se known manner, with at least one electric lock 50. This electric lock 50 is however operatively connected to the electronic control unit 30, despite being conventionally designed to lock the movable door leaf 12 in a closed configuration thereof.

The fixture 10 is also provided with power-supply means 42, which are designed to electrically power the electronic control unit 30, the user interface device 34, the electronic audio communication system 36, the electronic video acquisition system 38, the network interface device 40, the electric lock 50 and, generally, all electrical and/or electronic devices which may be optionally provided for on the fixture 10. For example, the electrical power supply means 42 may comprise low voltage power supply cables, designed for the connection with an external electrical power source with respect to the fixture 10. The power supply cables may be at least partially inserted into the support framework 16, 18 of the fixture 10. For example, the power supply cables may be applied on flat and flexible bases to allow them to pass under the gaskets usually provided for on the support framework 16, 18, as well as in the profiles which form such support framework 16, 18. The electrical power source could also be the network which provides power supply to the building in which the fixture 10 is installed, or it may consist of further electrical power sources, such as for example batteries of accumulators (not shown).

The fixture 10 may be optionally provided with at least one proximity sensor 44, which is operatively connected to the electronic control unit 30, is integrated in the support framework 18 and it is electrically powered through the power-supply means 42. Still optionally, the fixture 10 may also be provided with at least one smart card reader 48, which is also operatively connected to the electronic control unit 30, is integrated in the support framework 18 and it is electrically powered through the power-supply means 42.

All electrical and/or electronic devices installed on the fixture 10 contribute to form an integrated system for video intercom devices and for controlling the accesses of the fixture 10. This system may therefore operate both as a video intercom, and as a virtual porter's desk, that is combining the functions of a video intercom with other new functionalities. These new functions comprise controlling and tracing the passage of visitors and/or suppliers near the fixture 10, through integrated GSM telephony and messaging systems.

For example, when one or more users (visitors and/or suppliers) are close to the fixture 10, on the external side of the fixture 10, they may carry out the combined activation of the user interface device 34, of the electronic audio communication system 36, of the electronic video acquisition system 38 and of the network interface device 40, all managed and coordinated by the electronic control unit 30. This activation allows:
- to send, on the remote communication device S of one or more of the people who live in the building, a text message and/or a photograph of the visitor and/or supplier;
- to record, in the electronic control unit 30, for example on a special memory card of the electronic control unit 30, an audio and/or audio/video message which can be subsequently sent to the remote communication device S of one or more people who live in the building;
- to send, on the remote communication device S of one or more people who live in the building (which in this case must necessarily consist of a smartphone or at least a conventional mobile phone), a voice call on a special network (GSM, UMTS, etc.), without the visitor and/or supplier necessarily being aware of the phone number of the people who live in the building.

The people who live in the building, a priori, have the possibility of configuring the integrated system for video intercom devices and for controlling the accesses of the fixture 10 through access to the personal pages thereof. This access may be carried out by means of PC, Tablet or App for smartphones, whether Android or iOS, which is placed in communication with the system through the network interface device 40. From a formal point of view, the minimum condition for this to occur is to fill out a specifically prepared form with the personal information, so as to allow access to services offered by the integrated system for video intercom devices and for controlling the accesses of the fixture 10.

The people who live in the building may therefore access the following functionalities of the system:
- once the visitor and/or supplier presses the calling button provided for on the user interface device 34, a person who lives in the building can see the visitor and/or supplier on the remote communication device S (smartphone and/or video intercom) thereof through the video camera 38: the visitor and/or supplier is not notified of this functionality, so as to allow interaction or non-interaction with such visitor and/or supplier depending on the appropriateness/willingness of the person who lives in the building;
- the person who lives in the building may answer the voice call directly using the smartphone thereof (which would operate as some sort of "condominium mobile phone") instead of doing so through the conventional intercom system;
- upon receiving a call notification, the person who lives in the building may, subsequently, view or listen to the received messages;
- the person who lives in the building may in turn record, for example on a special memory card of the electronic control unit 30, text or voice messages for mail carriers, couriers, technicians or other service providers, so that they receive any instructions relating to the deliveries and/or to the activities to be carried out in the building;
- possibility for the people who live in the building to track the unanswered calls (visitor and/or supplier logbook).

With regard to those who carry out professional activities, the integrated system for video intercom devices and for controlling accesses of the fixture 10 may provide for a "virtual identification plate" function, so as to provide further information and services to the users through the user interface device 34. For example, these additional information and services may comprise business hours, activities carried out, alternative addresses and other essential information, besides the information provided for with regard to the people who live in the building. With regard to the recipients of these additional information and services, the access points designated thereto may be differentiated depending on the type of users, for example by providing for a plurality of specially dedicated user interface devices 34.

The integrated system for video intercom devices and for controlling the accesses of the fixture 10 may further provide the users also with general and specific information, as well as notifications on the condition of the building and initiatives related thereto. Also this information could be provided through one or more further specifically dedicated user interface devices 34.

Where there is provided for the installation of special sensors (not shown), the software installed on the electronic control unit 30 could be cable of providing instructions, that is independently take control actions, for optimising the energy resources of the building through a heuristic algorithm and behaviour analysis based on artificial intelligence. Artificial intelligence elements may be used by the system also for the function of controlling accesses and for generating linked reports.

The access to the building, through the movable door leaf 12 of the fixture 10, may also be made "keyless". As a matter of fact, the fixture 10 may be provided with at least one relay 52, which is operatively connected to the electronic control unit 30 and which can be activated through Bluetooth technology to actuate the electric lock 50 upon recognition, by the electronic control unit 30, of a determined remote communication device S. In other words, the Bluetooth relay 52 may allow to recognise the smartphone of the people who live in the building, therefore actuating the electric lock 50 only after the recognition. Alternatively, for the purposes of actuating the electric lock 50 there may be used a PIN pad (not shown), a badge (through a smart card reader 48, if present) or NFC (Near Field Communication) devices. All this while maintaining the possibility of using a conventional key for actuating the electric lock 50.

In the event of a failure that prevents the system from operating, for example power or data network outage, or even malfunctions of the equipment that forms the integrated system for video intercom devices and for controlling the accesses according to the present invention, the system would be disabled until restoration. The fixture 10 is therefore provided with a backup system which allows a potential visitor to access the video intercom mode through the remote communication device S (smartphone or tablet, Android or iOS indistinctively). To this end, the fixture 10 is provided with at least one unique wireless communication code 54 (figure 9) configured to send data to a determined remote communication device S. This unique wireless communication code 54 substantially consists of an electronic tag and which may for example consist of a QR code, an NFC (Near Field Communication) tag and/or any graphic code readable with a digital optical device.

The unique wireless communication code 54 may be contained in a respective protection container, for example made of transparent plastic (polymethylmethacrylate or polycarbonate). This protection container may be fixed to the support framework 18 of the fixture 10, for example in proximity of the user interface device 34.

Through the backup system described up to now, in case of malfunction of the equipment integrated in the fixture 10, the communication between one or more users who are close to the fixture 10, on the external side of the fixture 10, and one or more of the people who live in the condominium may be carried out as follows. The users who are close to the fixture 10 perform the reading, through the remote communication device S thereof (typically a smartphone) of the unique wireless communication code 54. As mentioned above, this unique wireless communication code 54 may preferably consist of a QR code and/or an NFC tag. The unique wireless communication code 54 is configured to send data to the remote communication device S of the users who are close to the fixture 10. These data substantially comprise the same user interface provided by the user interface device 34 integrated in the fixture. In other words, after reading the QR code and/or the NFC tag, on the browser of the smartphone of the users who are close to the fixture 10 there will appear the user interface of the user interface device 34 with which there is associated a unique wireless communication code 54.

From this point forward the backup system may operate in the same way described above with reference to the use of the user interface device 34. For example, through the aforementioned user interface, which in the meantime has been stored on the remote communication device S thereof, the users who are close to the fixture 10 may send a text message and/or a photograph thereof on the remote communication device S of one or more of the people who live in the building. Alternatively, or additionally, still through the aforementioned user interface stored on the remote communication device S thereof, the users who are close to the fixture 10 may also send an audio and/or audio/video message, and/or a voice call, on the remote communication device S of one or more of the people who live in the building.

The user interface to be used through the remote communication device S is preferably an app compatible with the Android and iOS operating systems. In the event of absence of stable or sufficiently fast data connection between the remote communication device S, the system makes a voice call to the number indicated when configuring the system.

Therefore, it has been shown that the fixture with an integrated control system according to the present invention achieves the objects outlined above, with clear advantages both in terms of saving time/money, given that this is a single system integrated in a single fixture, and in terms of increasing internal and external safety for buildings in which the fixture is installed.

The fixture with an integrated control system of the present invention thus conceived is in any case susceptible to various modifications and variants, all falling within the same inventive concept; furthermore, all details can be replaced by technically equivalent elements. Basically, the materials used as well as the shapes and dimensions may vary according to the technical needs.

Therefore, the scope of protection of the invention is defined by the attached claims.

## Claims

1. A fixture (10) for buildings comprising:
- at least one door leaf (12, 14) which comprises:
- a support framework (16, 18), and
- at least one wall (20, 22) mounted on said support framework (16, 18), wherein each wall (20, 22) is a stratified wall consisting of a first at least partially transparent front panel (24A), a second at least partially transparent rear panel (26) and at least one at least partially transparent intermediate panel (24B), wherein said intermediate panel (24B) is interposed between said first front panel (24A) and said second rear panel (26), wherein between the first front panel (24A) and the intermediate panel (24B) there is interposed at least one first film (28A) made of at least partially transparent plastic material, and wherein between the intermediate panel (24B) and the second rear panel (26) there is interposed at least one second film (28B) made of at least partially transparent plastic material;
the fixture (10) further comprising:
- at least one electronic control unit (30), which is at least partially contained in a container (32) obtained in the support framework (18);
- at least one user interface device (34), which comprises at least one touch screen, is operatively connected to the electronic control unit (30) and it is positioned inside an intermediate through housing (28B) obtained on said intermediate panel (24B), wherein said user interface device (34) has a thickness substantially equal to the thickness of said intermediate panel (24B) and it occupies a surface substantially equal to the overall thickness of said intermediate through housing (28B);
- at least one capacitive touch foil (46), which is positioned inside a front through housing (28A) obtained on said first front panel (24A), at said intermediate through housing (28B) and said intermediate through housing (34), wherein said capacitive touch foil (46) has a thickness substantially equal to the thickness of said first front panel (24A) and it occupies a surface substantially equal to the overall thickness of said front through housing (28A), and wherein said capacitive touch foil (46) has dimensions compatible with the dimensions of the touch screen of said user interface device (34), so as to cover said user interface device (34);
- an electronic audio communication system (36), which comprises at least one audio input device and at least one audio output device, is operatively connected to the electronic control unit (30) and it is integrated in the support framework (18);
- an electronic video acquisition system (38), which comprises at least one video camera, is operatively connected to the electronic control unit (30) and it is integrated in the support framework (18);
- at least one network interface device (40), which is operatively connected to the electronic control unit (30) and it is designed to place in communication said user interface device (34) with at least one remote communication device (S), wherein said user interface device (34) is designed to activate an audio/video communication with said remote communication device (S);
- at least one electric lock (50), which is operatively connected to the electronic control unit (30) and it is designed to lock said at least one door leaf (12) in a closed configuration thereof; and
- power-supply means (42), which are designed to electrically power the electronic control unit (30), the user interface device (34), the electronic audio communication system (36), the electronic video acquisition system (38), the network interface device (40) and the electric lock (50).

2. The fixture (10) according to claim 1, further comprising at least one proximity sensor (44), which is operatively connected to the electronic control unit (30), is integrated in the support framework (18) and it is electrically powered through said power-supply means (42).

3. The fixture (10) according to claim 1 or 2, further comprising at least one smart card reader (48), which is operatively connected to the electronic control unit (30), is integrated in the support framework (18) and it is electrically powered through said power-supply means (42).

4. The fixture (10) according to any one of claims 1 to 3, **characterised in that** said power-supply means (42) comprise low voltage power supply cables, designed for the connection with an external electrical power source with respect to the fixture (10).

5. The fixture (10) according to any one of claims 1 to 4, further comprising at least one relay (52), which is operatively connected to the electronic control unit (30) and which can be activated through Bluetooth technology to operate said at least one electric lock (50) upon recognition, by said electronic control unit (30), of a specific remote communication device (S).

6. The fixture (10) according to any one of claims 1 to 5, further comprising at least one unique wireless communication code (54) configured to send data to a specific remote communication device (S).

7. The fixture (10) according to claim 6, wherein said unique wireless communication code (54) consists of a QR code and/or an NFC tag.

8. The fixture (10) according to claim 6 or 7, wherein said unique wireless communication code (54) is contained in a respective protection container fixed to the support framework (18) in proximity of said user interface device (34).

9. A method for controlling accesses into a building using a fixture (10) according to any one of claims 1 to 8, the method comprising the following steps:
- combined activation, by one or more users who are close to the fixture (10), on the external side of said fixture (10), of the user interface device (34), of the electronic audio communication system (36), of the electronic video acquisition system (38) and of the network interface device (40), all managed and coordinated by the electronic control unit (30);
- sending, on the remote communication device (S) of one or more of the people who live in the building, a text message and/or a photograph of said one or more users;
- recording, in the electronic control unit (30), an audio and/or audio/video message which can be subsequently sent to the remote communication device (S) of one or more people who live in the building; and
- sending, on the remote communication device (S) of one or more of the people who live in the building, a voice call without said one or more users being necessarily aware of the phone number of said one or more people who live in the building.

10. The method according to claim 9, wherein, in case of malfunction of the equipment of said fixture (10), the communication between one or more users who are close to the fixture (10), on the external side of said fixture (10), and one or more of the people who live in the building is carried out through the following steps:
- reading, by the remote communication device (S) of said one or more users, a unique wireless communication code (54) configured to send to said remote communication device (S), wherein said data comprise the user interface provided by said user interface device (34);
- sending, on the remote communication device (S) of one or more of the people who live in the building and through said user interface stored on the remote communication device (S) of said one or more users, a text message and/or a photograph of said one or more users; and/or
- sending, on the remote communication device (S) of one or more of the people who live in the building and through said user interface stored on the remote communication device (S) of said one or more users, an audio and/or audio/video message, and/or a voice call.
